# EUROPEAN PATENT SPECIFICATION

(11) **EP 3 567 413 B1**
(45) Date of publication and mention of the grant of the patent: **21.05.2025**
(21) Application number: 18757692.1
(22) Date of filing: 26.02.2018
(51) Int. Cl.: G02B 27/01, G06F 21/32, G02B 27/00, G06F 3/01, H04N 23/11

(54) **VIRTUAL REALITY HEAD-MOUNTED APPARATUS**
KOPFMONTIERTE VORRICHTUNG FÜR VIRTUELLE REALITÄT
APPAREIL DE RÉALITÉ VIRTUELLE PORTÉ SUR LA TÊTE

(30) Priority: 27.02.2017 CN 201710109091
(43) Date of publication of application: 13.11.2019
(73) Proprietor: Advanced New Technologies Co., Ltd., George Town, Grand Cayman KY1-9008 (KY)
(72) Inventor: WU, Jun, Hangzhou Zhejiang 311121 (CN); YIN, Huanmi, Hangzhou Zhejiang 311121 (CN); ZHANG, Hong, Hangzhou Zhejiang 311121 (CN); ZENG, Xiaodong, Hangzhou Zhejiang 311121 (CN)
(74) Representative: Marks & Clerk LLP
(86) International application number: PCT/CN2018/077280
(87) International publication number: WO 2018/153367

(56) References cited:
- WO-A1-2017/026371
- WO-A1-2017/026371
- CN-A- 104 834 852
- CN-A- 105 955 491
- CN-A- 106 873 159
- CN-U- 205 942 609
- CN-U- 206 584 119
- US-A1- 2015 009 574
- US-A1- 2016 259 986
- US-A1- 2018 218 211
- HAYDEN SCOTT: "Hands On: SMIs Gear VR Eye Tracking is Accurate, Fast and Lightweight", 24 February 2016 (2016-02-24), pages 1 - 4, XP055804523, Retrieved from the Internet <URL:https://www.roadtovr.com/hands-smis-gear-vr-eye-tracking-accurate-fast-lightweight/> [retrieved on 20210516]
- SCOTT W GREENWALD ET AL: "Eye gaze tracking with google cardboard using purkinje images", PROCEEDINGS OF THE 22ND ACM CONFERENCE ON VIRTUAL REALITY SOFTWARE AND TECHNOLOGY , VRST '16, ACM PRESS, NEW YORK, NEW YORK, USA, 2 November 2016 (2016-11-02), pages 19 - 22, XP058307017, ISBN: 978-1-4503-4491-3, DOI: 10.1145/2993369.2993407
- PUPIL DEV TEAM: "Blog - HTC Vive Eye Tracking Add On - Pupil Labs", 9 August 2016 (2016-08-09), pages 1 - 1, XP055946503, Retrieved from the Internet <URL:https://pupil-labs.com/blog/news/htc-vive-eye-tracking-add-on/> [retrieved on 20220726]
- PUPIL LABS: "Unbox the Pupil Labs add-on", 14 October 2016 (2016-10-14), XP055946479, Retrieved from the Internet <URL:https://www.youtube.com/watch?v=HGMjJLnK2_4> [retrieved on 20220726]
- PUPIL LABS: "TAKE HTC Vive apart a bit more so we can show a close up view", 14 October 2016 (2016-10-14), XP055946480, Retrieved from the Internet <URL:https://www.youtube.com/watch?v=nIzuwHagIXQ> [retrieved on 20220726]
- PUPIL LABS: "Closeup of the add-on engagement with the lens holder.", 14 October 2016 (2016-10-14), XP055946478, Retrieved from the Internet <URL:https://www.youtube.com/watch?v=zswmKmIBrss> [retrieved on 20220726]
- ANTHES CHRISTOPH ET AL: "State of the art of virtual reality technology", 2016 IEEE AEROSPACE CONFERENCE, IEEE, 5 March 2016 (2016-03-05), pages 1 - 19, XP032916463, DOI: 10.1109/AERO.2016.7500674

## Description

### TECHNICAL FIELD

This application relates to the technical field of virtual reality, and in particular, to a virtual reality head-mounted apparatus.

### BACKGROUND

Virtual reality (VR) technology is a technology that comprehensively utilizes a computer graphics system and various control interfaces to generate an interactive three-dimensional interaction environment on a computer to provide users with immersive experience. In related art, a user may wear a virtual reality head-mounted apparatus, such as VR glasses or a VR helmet, to obtain corresponding virtual reality experience.

However, due to unique characteristics of VR scenarios, technical solutions for traditional electronic devices such as mobile phones or PCs may not be applicable to VR scenarios. For example, to conduct identity verification of a user, processing methods based on password, gesture recognition, etc. in related art may cause an identity recognition process become too complicate and take too long to complete, if it can be completed at all.

US 2015009574 A1 discloses a HMD apparatus with an imaging optical system for each one of the eyes of a user, which includes at least one display unit to be viewed by the respective eye.

WO2017026371 A1 and US 2018/21821 Al describe a head-mounted display in which it is easy to photograph eyes of a user that wears the head-mounted display.

US 2016/259986 A1 discloses a head mounted device (HMD) includes an imaging unit configured to capture at least one image of a partial region of an iris, an electrocardiogram (ECG) sensor configured to receive an ECG signal, and a control unit configured to acquire at least one image of the partial region of the iris and ECG signals, and authenticate a user by using the acquired image(s) of the partial region of the iris and the ECG signals.

Hayden Scott: "Hands On: SMIs Gear VR Eye Tracking is Accurate, Fast and Lightweight" (https:// www.roadtovr.com/hands-smis-gear-vr-eye-tracking-accurate-fast-lightweight) discloses a Samsung Gear VR Headset as a support for attaching a mobile phone and playing VR content but enhanced with "a small pair of cameras placed on either side of the headset" - part of the SMI eye tracking kit.

Pupil Dev Team: "Blog - HTC Vive Eye Tracking Add On - Pupil Labs" (https://pupil-labs.com/blog/ news/htc-vive-eye-tracking-add-on) discloses the possibility of adding eye tracking to an existing HTC Vive HMD incorporating eye-facing cameras.

### SUMMARY

The invention provides a virtual reality head-mounted apparatus as set out in the accompanying claims. Also disclosed herein is a virtual reality head-mounted apparatus, which can perform, by acquiring eye pattern features of a user, an identity recognition operation on the user wearing the virtual reality head-mounted apparatus quickly and accurately.

To achieve the foregoing objective, this application provides advantageous embodiments in the dependent claims.

This description also provides other aspects, as follows, that do not necessarily correspond to real realisations of the invention. The actual embodiments of the invention fall within the scope of the appended claims.

A first aspect of this application is directed to a virtual reality head-mounted apparatus, including: an apparatus body, the apparatus body including a convex lens and a camera, the camera being located on a user side of the convex lens, and a lens of the camera facing an eye of the user to acquire eye pattern features of the user.

Optionally, the camera is located below the convex lens, and the camera tilts upward by a first preset angle, so that the lens of the camera faces the eye of the user.

Optionally, the camera is located above the convex lens, and the camera tilts downward by a second preset angle, so that the lens of the camera faces the eye of the user.

Optionally, the camera is located at one of two convex lenses provided in the apparatus body for acquiring eye pattern features of the eye of the user corresponding to the one of the two convex lenses.

Optionally, the apparatus body includes two cameras, respectively located at two convex lenses in the apparatus body for respectively acquiring eye pattern features of the eye of the user corresponding to each convex lens.

Optionally, the camera is provided outside a visible area of the convex lens with respect to the user.

Optionally, the camera is installed in a position in close contact with the corresponding convex lens.

Optionally, the camera may be an RGB camera or an RGB-IR camera.

In the current invention, the apparatus further includes:
an apparatus interface provided on the apparatus body, the apparatus interface being capable of being electrically connected to an electronic device installed in the apparatus body, the electronic device being used to play virtual reality display content, and
the camera being connected to the apparatus interface through a data line, wherein the camera is configured to, upon receiving a switch control instruction transmitted by the electronic device through the apparatus interface and the data line, perform a state switching operation in response to the switch control instruction, and transmit the acquired eye pattern features to the electronic device through the apparatus interface and the data line.

Optionally, the apparatus further includes:
an adjustment component, the adjustment component being capable of performing angle adjustment on the camera, such that the lens of the camera tilts toward the eye of the user.

As can be seen from the above technical solutions, in this application, a camera is provided in an apparatus body of the virtual reality head-mounted apparatus, and a lens of the camera faces an eye of a user, so that eye pattern features of the user can be acquired by the camera without interfering with the user's viewing of virtual reality display content. Identity information of the user may be efficiently and quickly verified by comparing and identifying the eye pattern features, thereby improving the security of the virtual reality head-mounted apparatus.

### BRIEF DESCRIPTION OF THE DRAWINGS

FIG. 1 is a side cross-sectional view of a VR helmet provided by a first exemplary embodiment of this application.
FIG. 2 is a side cross-sectional view of a VR helmet provided by a second exemplary embodiment of this application.
FIG. 3 is a structural diagram of a VR helmet in a wearer direction provided by an exemplary embodiment of this application.
FIG. 4 is a side cross-sectional view of a VR helmet provided by a third exemplary embodiment of this application.
FIG. 5 is a side cross-sectional view of a VR helmet provided by a fourth exemplary embodiment of this application.

### DETAILED DESCRIPTION OF THE INVENTION

In order to further explain this application, the following embodiments are provided, using a VR helmet as an example, to introduce the related structure of a virtual reality head-mounted apparatus of this application.

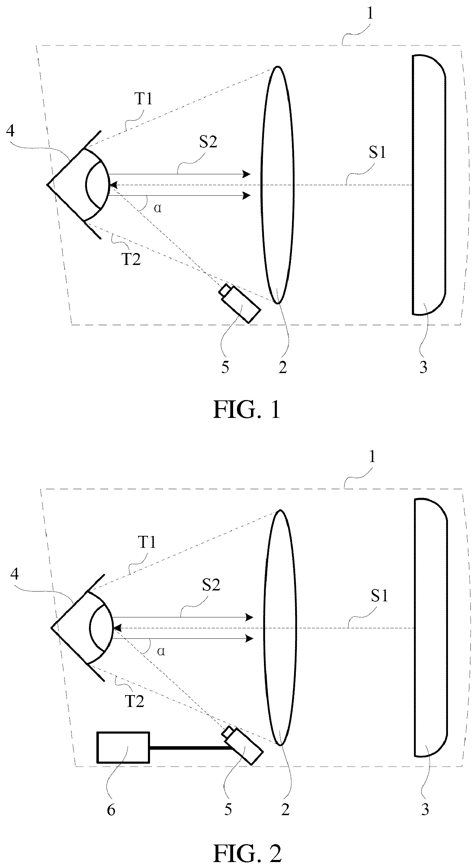

FIG. 1 is a side cross-sectional view of a VR helmet provided by an exemplary embodiment of this application. As shown in FIG. 1, a convex lens 2 and a VR playing component 3 are provided in an apparatus body 1 of a VR helmet. The convex lens 2 is located between a user (FIG. 1 shows an eye 4 of the user) and the VR playing component 3 in the apparatus body 1, so that VR display content played by the VR playing component 3 may, in a form of visible light S1, go through the convex lens 2 and propagate to the eye 4 of the user. The eye 4 of the user receives the visible light S1 for viewing the VR display content.

Additionally, the apparatus body 1 may be provided with a camera 5. The camera 5 is located on a user side (i.e., a left side in the embodiment shown in FIG. 1) of the convex lens 2, and a lens of the camera 5 faces an eye 4 of the user for acquiring eye pattern features of the user. Identity recognition on a user wearing the VR helmet may be performed by comparing and matching the eye pattern features. Compared with an identity recognition scheme based on password, gesture recognition, etc. in related art, this application can acquire and recognize eye pattern features of users by the camera 5 installed in the VR helmet, which does not require any complicated structures and devices, and does not require users to perform separate and additional operations. That improves the efficiency of identity recognition and simplifies user operations. The camera 5 may be an infrared radiation (IR) camera or an integrated red-green-blue (RGB)-IR camera, which is not limited in this application.

In the foregoing embodiment, in order to avoid blocking the VR display content played by the VR playing component 3, that is, to avoid blocking the propagation of the visible light S1, the camera 5 needs to be placed outside of a visible area of the convex lens 2 with respect to the eye 4 of the user (for example, the visible area may be indicated by an upper boundary T1 and a lower boundary T2 as shown in FIG. 1). The camera 5 may be provided at the bottom of the apparatus body 1, that is, the camera 5 is located below the convex lens 2. The camera 5 may tilt upward by a first preset angle, so that the lens of the camera 5 faces the eye 4 of the user.

While using the VR helmet, a user may maintain his/her eye 4 in a straight-looking state as shown in FIG. 1, thus the light S2 from the eye 4 may propagate substantially horizontally, and a line between the camera 5 and the eye 4 may form an angle α with the light S2. Then, in order to avoid the severe deformation of the acquired eye pattern features when the angle α is too large, the camera 5 may be disposed in close contact with an edge of the convex lens 2 (in term of at least one of a horizontal distance and a vertical distance). That is, the distance between the camera 5 and the eye 4 (in term of at least one of the horizontal distance and the vertical distance) is maximized to keep the angle α as small as possible.

Additionally, as shown in FIG. 2, the VR helmet may include an adjustment component 6, and the adjustment component 6 is electrically connected to the camera 5, so that when different users use the same VR helmet, the adjustment component 6 can adjust the angle of the camera 5 to ensure that the lens of the camera 5 faces the eye 4 of the user, thereby avoiding the distortion of the acquired eye pattern features.

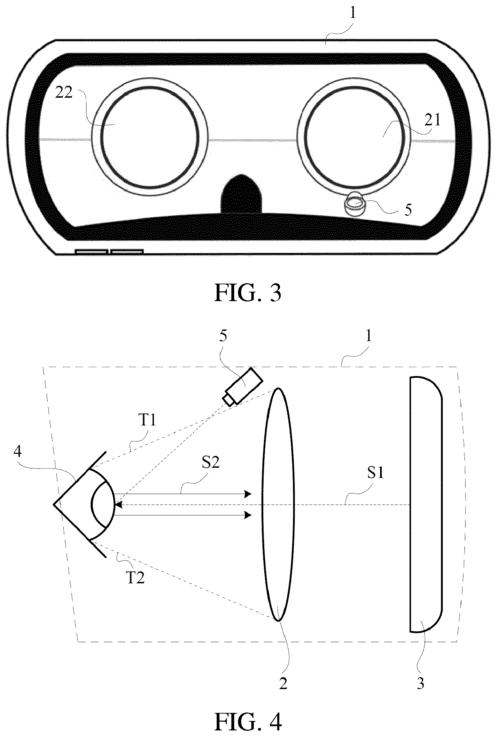

In the foregoing embodiment, as shown in FIG. 1, although in a vertical direction, in order to avoid blocking the visible light S 1, the camera 5 has to be located outside the visible area and cannot be at the same height as the eye 4, but in a horizontal direction, a horizontal angle between the lens of the camera 5 and the light S2 can be minimized, if not eliminated. For example, since the eye 4 of the user is usually located at a center position of the convex lens 2 in the horizontal direction, the camera 5 may be located at the center position of the convex lens 2 in the horizontal direction as shown in FIG. 3, thereby reducing the probability that the eye pattern features acquired by the camera 5 are deformed or distorted, or reducing the deformation or distortion on the eye pattern features.

In the foregoing embodiment, the VR helmet includes two convex lenses 2 corresponding to the eyes of the user. For example, FIG. 3 shows a right convex lens 21 corresponding to a right eye of the user, and a left convex lens 22 corresponding to a left eye of the user. Depending on actual requirements, one or more cameras 5 can be provided. For example, as shown in FIG. 3, a camera 5 may be disposed only at the right convex lens 21 to acquire eye pattern features of the right eye of the user; similarly, a camera 5 may be disposed only at the left convex lens 22 to acquire eye pattern features of the left eye of the user. Certainly, the cameras 5 may be disposed at the right convex lens 21 and the left convex lens 22 respectively to acquire eye pattern features of the right and left eyes of the user simultaneously or separately.

Certainly, although in the embodiment shown in FIGS. 1-3, the camera 5 is located at the bottom of the apparatus body 1 and below the convex lens 2, the camera 5 may be located at other positions, which is not limited in this application. For example, as shown in FIG. 4, the camera 5 may be disposed at the top of the apparatus body 1 and above the convex lens 2, such that the camera 5 tilts downward by a second preset angle, and the lens of the camera 5 faces the eye 4 of the user to achieve the acquisition of the eye pattern features. Similar to the embodiment shown in FIG. 2, the camera 5 in the embodiment shown in FIG. 4 may also be electrically connected to the adjustment component 6 to achieve angular adjustment of the camera 5. Similar to the embodiment shown in FIG. 3, the camera 5 in the embodiment shown in FIG. 4 may also be disposed at a center position of the corresponding convex lens 2 in the horizontal direction to reduce the probability that the eye pattern features acquired by the camera 5 are deformed or distorted, or reduce the deformation or distortion on the eye pattern features. Detail implementation will not be repeated here.

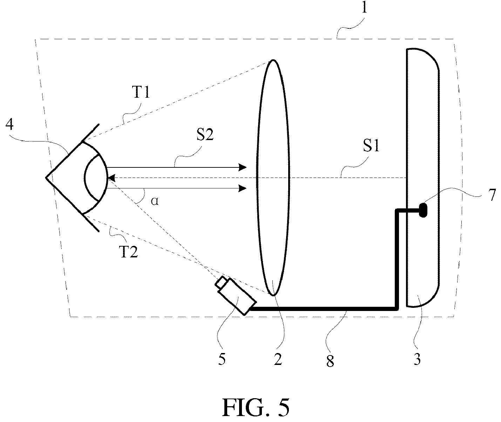

FIG. 5 is a side cross-sectional view of a VR helmet as in the current invention. As shown in FIG. 5, the VR helmet may be a split VR head-mounted apparatus, and an apparatus body 1 of the VR helmet is provided with an apparatus interface 7, so that the apparatus interface 7 is electrically connected to an electronic device such as a mobile phone or a tablet installed in the apparatus body 1. By using a processor and a graphic card for rendering, a screen component for displaying, the electronic device may work as the VR playing component 3 in the apparatus body 1.

Additionally, the camera 5 in the apparatus body 1 is connected to the apparatus interface 7 through a data line 8, so that when the electronic device connected to the apparatus interface 7 issues a switch control instruction, the camera 5 receives the switch control instruction through the apparatus interface 7 and the data line 8 to perform a state switching operation in response to the switch control instruction. In other words, by controlling the electronic device or an application program running on the electronic device, the electronic device sends a switch control instruction to the camera 5, thereby controlling the camera 5 to acquire the eye pattern features of the eye 4. That improves the controllability of the eye pattern features acquisition.

In addition, after the camera 5 completes the acquisition of the eye pattern features, if the VR helmet is provided with a processing module, the acquired eye pattern features may be transmitted to the processing module for processing. Alternatively, the camera 5 may transmit, through the apparatus interface 7 and the data line 8, the acquired eye pattern features to the foregoing electronic device for processing by the electronic device.

Other than a split VR head-mounted apparatus matched with an electronic device such as a mobile phone, the VR helmet of this application may include other forms of VR head-mounted apparatuses. For example, for the split VR head-mounted apparatus, the VR helmet may be paired with a PC host, a game console or another external apparatus. The VR playing component 3 may be a display component built into the VR helmet, etc., and the external apparatus is used for rendering of VR display content. For another example, when the VR helmet may be an integrated VR head-mounted apparatus, that is, the VR helmet may independently implement a VR playing function without resorting to an external apparatus, the VR playing component 3 is build-in in the VR helmet. The VR playing component 3 may have playing functions such as rendering and displaying of VR content.

It should also be noted that the terms "include", "comprise" and any other variants mean to cover the non-exclusive inclusion. Thereby, the process, method, article, or device which include a series of elements not only include those elements, but also include other elements which are not clearly listed, or include the inherent elements of the process, method, article and device. Without further limitation, the element defined by a phrase "include one..." does not exclude other same elements in the process, method, article or device which include the element.

Reference is made in detail to exemplary embodiments, examples of which are illustrated in the accompanying drawings. The above description refers to the accompanying drawings in which the same numbers in different drawings represent the same or similar elements unless otherwise represented. The implementations set forth in the above description of exemplary embodiments do not represent all implementations consistent with this application. Instead, they are merely examples of apparatuses and methods consistent with aspects related to this application as recited in the appended claims.

The terms used in this application are merely for the purpose of describing specific embodiments, and are not intended to limit this application. The terms "a", "said" and "the" of singular forms used in this application and the appended claims are also intended to include plural forms, unless otherwise specified in the context clearly. It should also be understood that, the term "and/or" used herein indicates and includes any or all possible combinations of one or more associated listed items.

It should be understood that although the terms such as first, second, and third may be used herein to describe various information, such information should not be limited to these terms. These terms are merely used for distinguishing information of the same type from each other. For example, within the scope of this application, first information may also be referred to as second information, and similarly, second information may also be referred to as first information. Depending on the context, the term "if" as used herein may be interpreted as "when ..." or "upon ..." or "in response to determining."

## Claims

1. A virtual reality head-mounted apparatus, comprising:
an apparatus body (1), the apparatus body (1) comprising a convex lens and a camera (5), and an apparatus interface (7), the camera (5) being located on a user side of the convex lens (2), and a lens of the camera (5) directly facing an eye of the user to acquire eye pattern features of the user,
wherein the apparatus interface (7) is provided on the apparatus body on a side of the convex lens (2) away from the user, the apparatus interface (7) being capable of being electrically connected to an electronic device installed in the apparatus body (1), the electronic device being a mobile phone or tablet used to play virtual reality display content,
the camera being connected to the apparatus interface (7) through a data line (8), wherein the camera is configured to, upon receiving a control instruction transmitted by the electronic device through the apparatus interface (7) and the data line (8), perform an operation to acquire the eye pattern features in response to the control instruction, and transmit the acquired eye pattern features to the electronic device through the apparatus interface (7) and the data line (8), the electronic device being configured to acquire the eye pattern features while the user is watching the virtual reality display content through the convex lens and to process the acquired eye pattern features to perform an identity verification operation on the user.

2. The apparatus according to claim 1, wherein the camera (5) is located below the convex lens (2), and the camera (5) tilts upward by a first preset angle, so that the lens of the camera (5) faces the eye of the user.

3. The apparatus according to claim 1, wherein the camera (5) is located above the convex lens (2), and the camera (5) tilts downward by a second preset angle, so that the lens of the camera (5) faces the eye of the user.

4. The apparatus according to claim 1, wherein the camera (5) is located at one of two convex lenses provided in the apparatus body (1) for acquiring eye pattern features of the eye of the user corresponding to the one of the two convex lenses.

5. The apparatus according to claim 1, wherein the apparatus body (1) comprises two cameras, respectively located at two convex lenses in the apparatus body (1) for respectively acquiring eye pattern features of the eye of the user corresponding to each convex lens.

6. The apparatus according to claim 1, wherein the camera (5) is provided outside a visible area of the convex lens with respect to the user.

7. The apparatus according to claim 1, wherein the camera (5) is installed at a position in close contact with the corresponding convex lens.

8. The apparatus according to claim 1, wherein the camera (5) is an RGB camera or an RGB-IR camera.

9. The apparatus according to claim 1, further comprising:
an adjustment component, the adjustment component being capable of performing angle adjustment on the camera (5), such that the lens of the camera (5) tilts toward the eye of the user.

## Patentansprüche

1. Am Kopf befestigte Virtual-Reality-Vorrichtung, Folgendes umfassend:
einen Vorrichtungskörper (1), wobei der Vorrichtungskörper (1) eine Konvexlinse und eine Kamera (5) und eine Vorrichtungsschnittstelle (7) umfasst, wobei sich die Kamera (5) auf einer Benutzerseite der Konvexlinse (2) befindet, und eine Linse der Kamera (5) einem Auge des Benutzers direkt zugewandt ist, um Augenmustermerkmale des Benutzers zu gewinnen,
wobei die Vorrichtungsschnittstelle (7) auf dem Vorrichtungskörper auf einer Seite der Konvexlinse (2) vom Benutzer entfernt bereitgestellt ist, wobei die Vorrichtungsschnittstelle (7) dazu in der Lage ist, elektrisch mit einer elektronischen Einrichtung, die im Vorrichtungskörper (1) installiert ist, verbunden zu werden, wobei die elektronische Einrichtung ein Mobiltelefon oder Tablet ist, das zum Abspielen von Virtual-Reality-Anzeigeinhalt verwendet wird,
wobei die Kamera mit der Vorrichtungsschnittstelle (7) durch eine Datenleitung (8) verbunden ist, wobei die Kamera konfiguriert ist, um beim Empfangen einer durch die elektronische Einrichtung über die Vorrichtungsschnittstelle (7) und die Datenleitung (8) übertragene Steuerungsanweisung eine Vorgang durchzuführen, um die Augenmustermerkmale als Antwort auf die Steuerungsanweisung zu gewinnen und die gewonnenen Augenmustermerkmale über die Vorrichtungsschnittstelle (7) und die Datenleitung (8) an die elektronische Einrichtung zu übertragen, wobei die elektronische Einrichtung konfiguriert ist, um die Augenmustermerkmale zu gewinnen, während der Benutzer den Virtual-Reality-Anzeigeinhalt durch die Konvexlinse ansieht, und die gewonnenen Augenmustermerkmale zu verarbeiten, um einen Identitätsprüfungsvorgang an dem Benutzer durchzuführen.

2. Vorrichtung nach Anspruch 1, wobei sich die Kamera (5) unter der Konvexlinse (2) befindet und sich die Kamera (5) um einen ersten voreingestellten Winkel nach oben neigt, sodass die Linse der Kamera (5) dem Auge des Benutzers zugewandt ist.

3. Vorrichtung nach Anspruch 1, wobei sich die Kamera (5) über der Konvexlinse (2) befindet und sich die Kamera (5) um einen zweiten voreingestellten Winkel nach unten neigt, sodass die Linse der Kamera (5) dem Auge des Benutzers zugewandt ist.

4. Vorrichtung nach Anspruch 1, wobei sich die Kamera (5) an einer von zwei Konvexlinsen befindet, die zum Gewinnen von Augenmustermerkmalen des Auges des Benutzers, das der einen der zwei Konvexlinsen entspricht, im Vorrichtungskörper (1) bereitgestellt sind.

5. Vorrichtung nach Anspruch 1, wobei der Vorrichtungskörper (1) zwei Kameras umfasst, die sich jeweils an zwei Konvexlinsen in dem Vorrichtungskörper (1) befinden, um jeweils Augenmustermerkmale des Auges des Benutzers zu gewinnen, die jeder Konvexlinse entsprechen.

6. Vorrichtung nach Anspruch 1, wobei die Kamera (5) außerhalb eines sichtbaren Bereichs der Konvexlinse in Bezug auf den Benutzer bereitgestellt ist.

7. Vorrichtung nach Anspruch 1, wobei die Kamera (5) an einer Position in engem Kontakt mit der entsprechenden Konvexlinse installiert ist.

8. Vorrichtung nach Anspruch 1, wobei die Kamera (5) eine RGB-Kamera oder eine RGB-IR-Kamera ist.

9. Vorrichtung nach Anspruch 1, ferner umfassend:
eine Anpassungskomponente, wobei die Anpassungskomponente dazu in der Lage ist, eine Winkelanpassung an der Kamera (5) so durchzuführen, dass die Linse der Kamera (5) sich zum Auge des Benutzers hin neigt.

## Revendications

1. Appareil de réalité virtuelle monté sur la tête, comprenant :
un corps d'appareil (1), le corps d'appareil (1) comprenant une lentille convexe et une caméra (5), et une interface d'appareil (7), la caméra (5) étant située sur un côté d'utilisateur de la lentille convexe (2), et une lentille de la caméra (5) faisant directement face à un œil de l'utilisateur pour acquérir des caractéristiques de motif d'un œil de l'utilisateur,
dans lequel l'interface d'appareil (7) est fournie sur le corps d'appareil sur un côté de la lentille convexe (2) opposé à l'utilisateur, l'interface d'utilisateur (7) étant capable d'être connectée électriquement à un dispositif électronique installé dans le corps d'appareil (1), le dispositif électronique étant un téléphone mobile ou une tablette, utilisé pour lire un contenu d'affichage de réalité virtuelle,
la caméra étant connectée à l'interface d'appareil (7) par l'intermédiaire d'une ligne de données (8), dans lequel la caméra est configurée pour, lors de la réception d'une instruction de commande transmise par le dispositif électronique via l'interface d'appareil (7) et la ligne de données (8), exécuter une opération pour acquérir les caractéristiques de motif de l'œil en réponse à l'instruction de commande, et transmettre les caractéristiques de motif de l'œil acquises au dispositif électronique via l'interface d'appareil (7) et la ligne de données (8), le dispositif électronique étant configuré pour acquérir les caractéristiques de motif de l'œil pendant que l'utilisateur est en train de regarder le contenu d'affichage de réalité virtuelle à travers la lentille convexe et pour traiter les caractéristiques de motif de l'œil acquises afin d'exécuter une opération de vérification d'identité sur l'utilisateur.

2. Appareil selon la revendication 1, dans lequel la caméra (5) est située en dessous de la lentille convexe (2), et la caméra (5) s'incline vers le haut selon un premier angle prédéfini, de sorte que la lentille de la caméra (5) fait face à l'œil de l'utilisateur.

3. Appareil selon la revendication 1, dans lequel la caméra (5) est située au-dessus de la lentille convexe (2), et la caméra (5) s'incline vers le bas selon un deuxième angle prédéfini, de sorte que la lentille de la caméra (5) fait face à l'œil de l'utilisateur.

4. Appareil selon la revendication 1, dans lequel la caméra (5) est située au niveau de l'une de deux lentilles convexes fournies dans le corps d'appareil (1) pour acquérir des caractéristiques de motif d'un œil de l'œil de l'utilisateur correspondant à l'une des deux lentilles convexes.

5. Appareil selon la revendication 1, dans lequel le corps d'appareil (1) comprend deux caméras, situées respectivement au niveau de deux lentilles convexes dans le corps d'appareil (1) pour acquérir respectivement des caractéristiques de motif d'œil de l'œil de l'utilisateur correspondant à chaque lentille convexe.

6. Appareil selon la revendication 1, dans lequel la caméra (5) est fournie à l'extérieur d'une zone visible de la lentille convexe par rapport à l'utilisateur.

7. Appareil selon la revendication 1, dans lequel la caméra (5) est installée à une position en contact étroit avec la lentille convexe correspondante.

8. Appareil selon la revendication 1, dans lequel la caméra (5) est une caméra RVB ou une caméra RVB-IR.

9. Appareil selon la revendication 1, comprenant en outre :
un composant de réglage, le composant de réglage étant capable de réaliser un réglage d'angle sur la caméra (5), de sorte que la lentille de la caméra (5) s'incline vers l'œil de l'utilisateur.
